Europäisches Patentamt

European Patent Office

Office européen des brevets

(19)

(11) Publication number: **0 186 489 B1**

# EUROPEAN PATENT SPECIFICATION

(12)

(45) Date of publication of patent specification: **03.04.91**

(51) Int. Cl.⁵: **F22B 37/58**, B23P 19/02, B25B 27/02

(21) Application number: **85309406.8**

(22) Date of filing: **23.12.85**

(54) Device and method for protecting defect regions of steam generator tubes during removal.

(30) Priority: **27.12.84 US 686805**

(43) Date of publication of application:
**02.07.86 Bulletin 86/27**

(45) Publication of the grant of the patent:
**03.04.91 Bulletin 91/14**

(84) Designated Contracting States:
**BE CH FR GB IT LI SE**

(56) References cited:
**EP-A- 0 047 407**
**EP-A- 0 120 277**
**DE-C- 58 951**
**GB-A- 2 084 542**
**US-A- 1 335 117**

(73) Proprietor: **WESTINGHOUSE ELECTRIC CORPORATION**
**Westinghouse Building Gateway Center**
**Pittsburgh Pennsylvania 15235(US)**

(72) Inventor: **Brunner, Michael George**
**310 Marose Drive**
**Pittsburgh Pennsylvania(US)**
Inventor: **Calhoun, Gregory Lee**
**457 Markle Road**
**Apollo Pennsylvania(US)**

(74) Representative: **van Berlyn, Ronald Gilbert**
**23, Centre Heights**
**London, NW3 6JG(GB)**

Rank Xerox (UK) Business Services

## Description

### Field of the Invention

This invention relates generally to a tube protection device and method for use in a nuclear steam generator and, more particularly to a device which protects defect regions of such a tube from being damaged or distorted during removal of the tube from the generator for subsequent defect analysis and testing.

### Description of the Prior Art

Tube-type heat exchangers, commonly referred to as steam generators, as employed in nuclear reactor power plants are well known in the art. U.S. Patent No. 4,079,701 to Hickman et al. and U.S. Patent No. 4,276,856 to Dent et al., assigned to Westinghouse Electric Corporation, the common assignee of this invention, is an example of such a steam generator. The development of defects in the heat exchanger tubes is also a well-known problem. The need to plug a heat exchange tube arises when a defect permitting a leak in such a tube develops, creating both an ineffective heat exchanger problem and, more seriously, a radioactive contamination problem. Particularly, a defect in a heat exchanger tube permits primary fluid, which recirculates through the tube and a nuclear power generator, to leak into the secondary fluid which surrounds the tubes; since the former is generally radioactive, the secondary fluid surrounding the tubes becomes contaminated. U.S. Patent No. 4,369,662, assigned to the common assignee herein, discloses a plug installation apparatus which is capable of quickly installing a plug in such a heat exchanger tube to render it inoperable, and of verifying proper installation of the plug.

Because of the seriousness of the problems presented by defects developing in steam generator tubes, it is also the practice in the art to remove tubes having such defects from the generator, to permit conducting defect analyses and testing, including destructive examination. Prior art techniques for removal of such tubes include placing a tapered, threaded mandrel into the end of the tube containing the defect, and then removing the tube using a hydraulic puller assembly which pulls on the mandrel and the tube. The force required to remove the tube, however, frequently imposes excessive loads on the tube causing the latter to elongate; since the defect region of the tube is typically the weakest part of the tube, the tube is prone to distortion and breakage in the defect region, thus destroying the defect region and precluding the intended examination and analyses.

Previously, solutions to avoiding the problem of destroying the defect region during the pulling of the tube have been proposed wherein a device both pulls and protects the tube simultaneously; such prior art devices, however, have generally been limited to use with only a limited extent of the tube adjacent an open end thereof (e.g., the bottom three feet) and thus are incapable of protecting against destruction or distortion of defects in the tube located at positions more remote from the open end.

EPC Publication EP-A-0120277 (equivalent to U.S. Patent 4,485,847) teaches using a sleeve with tapered ends and annular grooves one to each end, for use in sleeving a defective region of a steam generator tube. In use a removable tension member which is inserted in to the sleeve, expands the ends of the sleeve into sealing engagement with the adjacent tube wall to make a deteriorated tube functional again through the inserted sleeve. The present invention, however, is concerned with removing a deteriorated portion of a tube by cutting and pulling without the deformation.

The invention consists in apparatus for protecting a region of a tube from deformation in a tube-type steam generator during withdrawal of the tube through an aperture in a support structure which frictionally engages the exterior walls of said tube, said apparatus comprising: a tube protection device of predetermined axial length sufficient to span the region of the tube to be protected from deformation, said device including gripper means disposed at opposite ends of said device which are expansible from a first relaxed state displaced from the interior wall surfaces of said tube to a clamped second state in which said gripper means releasably and frictionally engage the respective, contiguous interior wall surfaces of said tube; actuator means operable through rotation in a first sense for actuating said opposite ends of said gripper means to expand from said relaxed state to said clamped state and operable through rotation in an opposite sense to permit said gripper means to contract from said clamped state to said relaxed state, wherein said gripper means includes a generally cylindrical metal sleeve configured at its opposite ends to permit elastic expansion and contraction thereof between said relaxed and clamped conditions, and wherein said actuator means includes a mandrel received within said sleeve having a first end mating with the interior of a corresponding end of said gripper means and a second end extending longitudinally from the corresponding second end of said gripper means, said second end of said mandrel comprising a drive engaging portion and an externally threaded portion extending from said drive engaging portion toward said corresponding second end of said gripper means; and wedge means having a surface at a first end thereof disposed toward said gripper means for engaging the interior of said corresponding second end thereof and a drive engaging means being received for threaded rotation on said externally threaded portion of said second end of said mandrel for selective axial displacement along said mandrel in first and second opposite directions in accordance with selective rotation thereof, relative to said mandrel, in corresponding first and second opposite senses, characterized by: selectively connectable means including means for selectively engaging said drive engaging means of said wedge means for selectively rotating said wedge means in said first and second senses, said selectively connectable means further including: holding means, disposed coaxially within said drive engaging means thereof and rotatable relatively thereto, for engaging said drive engaging portion of said mandrel; means for restraining said holding means against rotation; and a link mechanism of adjustable length receivable through a tube from an open end thereof for connecting said drive engaging portion thereof with said drive engaging means of said wedge means, and said holding means thereof with said engaging portion of said mandrel, wherein said means for restraining rotation of said holding means comprises a wire extending coaxially through axial bores provided therefor in said link mechanism to an accessible position at the exterior of the open end of said tube.

A preferred embodiment described herein teaches a tube protection device and an associated installation device which is employed to insert the tube protection device into a steam generator tube at any height, or position, of the tube at which a defect exists. The installation device also is used to release the tube protection device for withdrawal from the tube, and for pulling the device from the tube.

In use, the installation device first positions the tube protection device at the required tube location for spanning the defect. The installation device then is operated to cause two separate gripping portions of the tube protection device, located at its opposite ends, to expand and firmly engage the interior of the tube wall at positions displaced from the defect. The torque imposed by the installation device is limited so as to prevent the outside diameter of the tube from being expanded, or increasing, as the gripping portions of the tube protection device expand toward and engage the tube wall. The installation device then is removed from the tube. Thereafter, as is conventional, a tapered mandrel is threaded into the bottom of the tube; a hydraulic pulling assembly then threaded into the bottom of the tube; a hydraulic pulling assembly then engages the mandrel for transmitting the necessary force to withdraw the tube from the generator.

The tube protection device strengthens the tube section which it spans, so that if the force used to pull the tube exceeds the yield of the tube material, the tube elongates only in the areas of the tube not protected by the tube protection device of the invention. The tube protection device of the invention may be made to any desired length as may be required to span the defect region within the tube. One device may span more than one defect and multiple tube protection devices in accordance with the invention can be installed in the same tube, if necessary, so as to span corresponding, displaced defects in the tube.

## BRIEF DESCRIPTION OF THE DRAWINGS

A more detailed understanding of the invention can be had from the following description of a preferred embodiment, given by way of example and to be studied in conjunction with the accompanying drawing wherein:

Figure 1A is a plan view, partially broken and partially in cross-section, of the tube protection device of the invention positioned within a segment of a heat exchange tube, in a relaxed condition;

Figure 1B is a plan view, partially broken and partially in cross-section, of the tube protection device of the invention positioned in a clamped condition within a segment of a heat exchange tube;

Figure 2A is an elevational view, partially broken away and partially in cross-section, of an installation device used in accordance with the invention for positioning the tube protection device of the invention at a desired position within a tube, and adapted for operating the tube protection device between clamped and unclamped conditions within the tube;

Figure 2B is an elevational view corresponding to that of Figure 2A, illustrating the installation device of the invention as adapted for pulling a tube protection device from a remote segment of a heat exchange tube;

Figure 3 is an elevational view, partially broken away and partially in cross-section, of a gripper portion of a tube protection device in accordance with the invention;

Figure 4 is an elevational view, partially broken away, of a mandrel portion of the tube protection device of the invention;

Figure 5 is an elevational view, partially in cross-section, of a wedge nut assembly associated with the mandrel of Figure 4;

Figures 6A and 6B are plan and elevational, cross-sectional views of an adaptor element of the installation device of Figure 2A;

Figures 7A and 7B are elevational and cross-sectional views, respectively, of an end extension element comprising a part of the installation device of Figure 2A;

Figures 8A and 8B are elevational and cross-sectional views, respectively, of a link comprising a part of the installation device of Figure 2A;

Figure 9 is an exploded, cross-sectional view of a drive socket assembly comprising a part of the installation device of Figure 2A; and

Figure 10 is an exploded, cross-sectional view of a removal socket employed with the installation device of Figure 2B.

## DETAILED DESCRIPTION OF THE PREFERRED EMBODIMENT

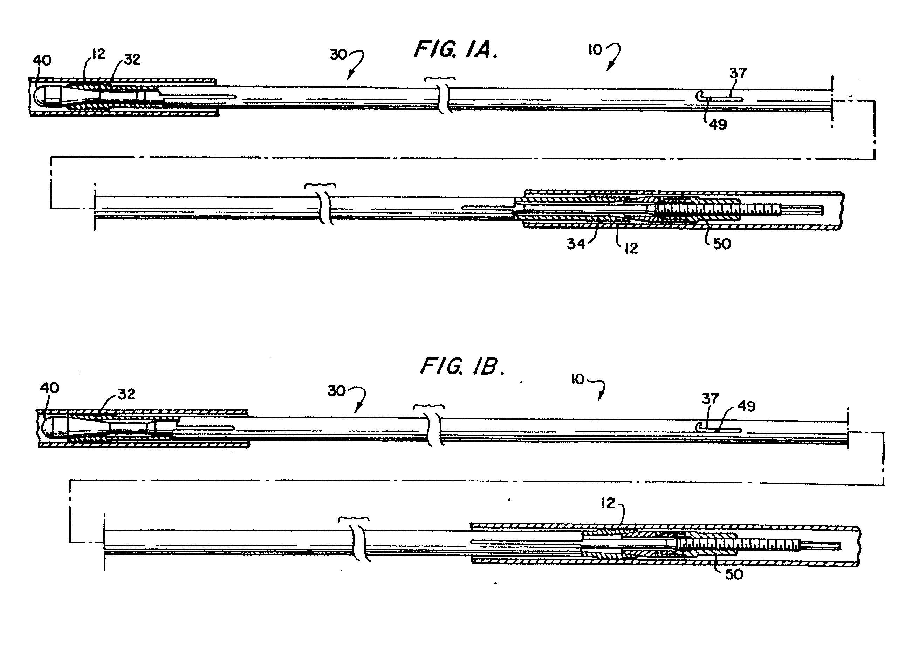

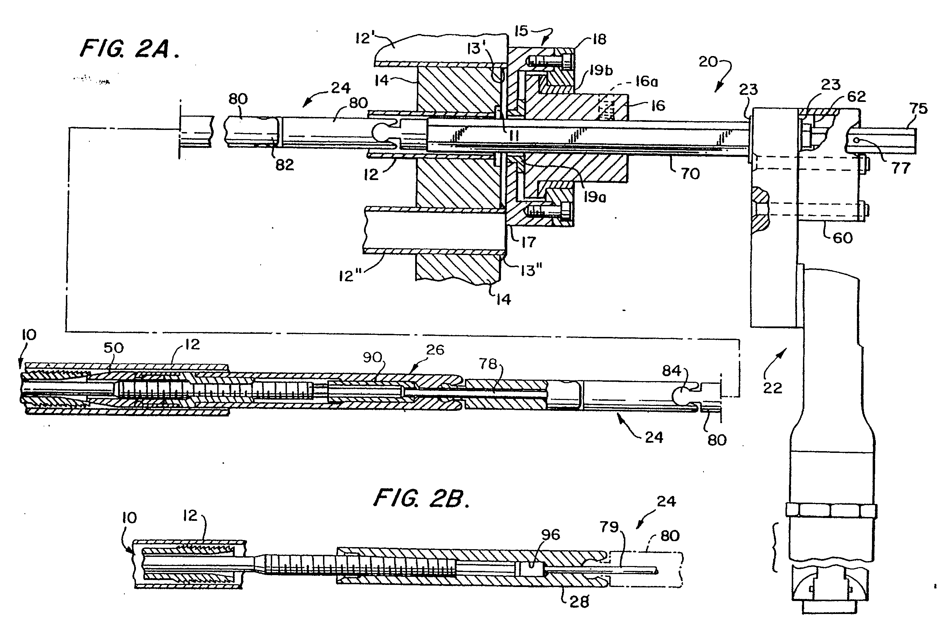

The principal components of the invention comprise a tube protection device 10 and an installation tool 20, as generally disclosed in Figures 1A, 1B, 2A and 2B. With concurrent reference thereto, a tube protection device 10 is inserted into a heat exchange tube 12, as shown in cross-section in Figure 1A, by the adjustable length link mechanism 24 of the installation tool 20, to the position required to span a defect (not shown) in the tube 12.

The tool 20 includes a power drive device 22 which connects to and operates through the adjustable length link mechanism 24 and a drive socket 26, as shown in Figure 2A, for engaging a wedge assembly 50 carried by the device 10 both for initially inserting the device 10 to the required position within the tube 12 and then for driving same from the relaxed condition shown in Figure 1A to the clamped condition shown in Figure 1B. As will be described, this will be accomplished by driving the drive socket 26 in clockwise rotation through link mechanism 24 by the power drive device 22 (assuming a right-hand thread relationship of the involved components, as illustrated in the drawings). The tool 20 may then be withdrawn from the tube 12, leaving the device 10 in place in its clamped condition for protecting the defect region of the tube 12 as the latter is pulled from the steam generator.

As illustrated in Figure 2A, the tube 12 typically is mounted in a tube sheet 14, through which it must be pulled in being withdrawn from the generator. As described more fully hereafter, a significant feature of the invention is that the tube protection device 10, in its clamped condition as shown in Figure 1B, does not expand the outer diameter of the tube 12, thus assuring that the tube 12 may be pulled through the tight fitting aperture in the tube sheet 14 with the device 10 in place. Although elongation, and accompanying reduction in diameter, of the tube 12 may occur in the regions thereof which are not protected by the tube protection device 10 of the invention, such reduction in diameter which occurs in the portions of the tube 12 immediately adjacent the positions of engagement of the tube protection device 10 therewith in fact aid in achieving a tight grip of the device 10 with the contiguous, interior walls of the tube 12. The device 10 thus assures that the portion of the tube 12 which it spans is protected against elongation or other deformation, thereby to preserve the defect region for subsequent examination and analysis.

When it is desired to remove the tube protection device from a clamped condition at an established position within the tube 12 -- either for relocating same within the tube 12 due to an initial positioning error, or after the tube has been pulled and thus for complete removal of the device 10 to permit examination and analysis of the defect in tube 12 -- the drive socket 26 is driven in counter-clockwise rotation through link mechanism 24 by the drive device 22, to retract the tube protection device 10 from the clamped condition to the original relaxed condition of Figure 1A. The drive socket 26 is then replaced by the removal socket 28 which, in a manner to be described, is threaded onto the device 10 through link mechanism 24 and the power drive device 22, for secure engagement thereto. Thereafter, axial force is extended through link mechanism 24 to pull the device 10 from the tube 12. In those cases in which tube 12, after removal, can be cut at positions adjacent the ends of the tube protection device 10, the wedge assembly 50 is directly accessible, permitting a more convenient removal operation.

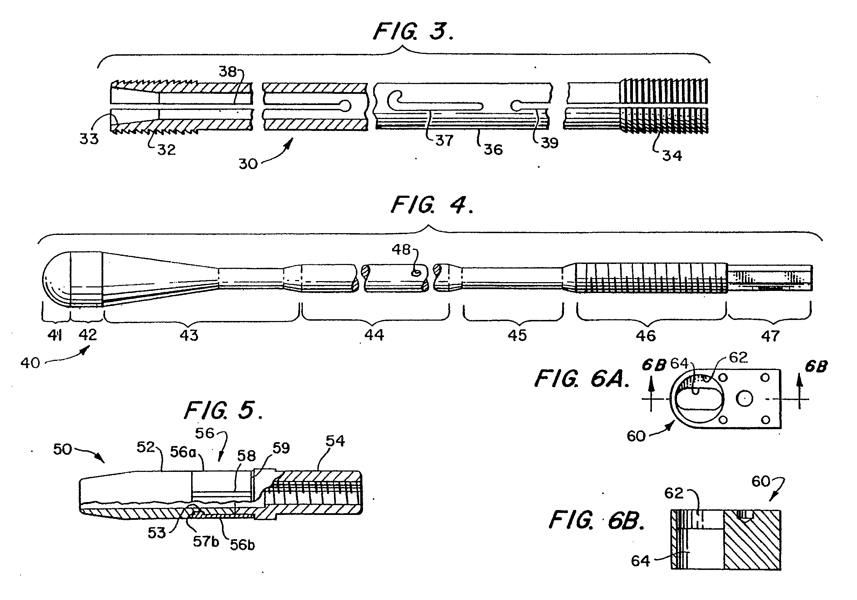

With concurrent reference to Figures 1A and 1B, 3, 4, and 5, the principal elements of the tool protection device 10 include a gripper 30, a mandrel 40 and a wedge assembly 50. The gripper 30 is of generally cylindrical configuration and annular cross-section, and includes identical end portions 32 and 34 having sharp teeth on the outer surfaces thereof. The end portions 32 and 34 have tapered interior walls defining an interior, or female, frustoconical receiving surface 33, extending inwardly approximately one-half the axial length of the respective end portions 32 and 34, as seen in the cross-sectional view of end portion 32 in Figure 3. The central portion 36 of gripper 30, intermediate the end portions 32 and 34 thereof, is of generally cylindrical cross-section and includes centrally disposed L-shaped slots 37 on opposite (i.e., 180 degree-separated, or diametrically opposed) sides thereof, only one of which is visible in Figures 1A, 1B, and 3. The longer dimension of the L-shaped slot 37 extends in a parallel axial direction and the shorter leg extends circumferentially of the central, cylindrical portion 36. A set of four, 90 degree-spaced (i.e., quadrature-related) elongated slots 38 extend in parallel-axial relation from the central portion 36 through end portion 32; a corresponding set of four slots 39 are provided at the opposite end of the gripper 30. (Only one slot of each of the sets 38 and 39 is visible in Figure 3.)

As will be described, by axially advancing the wedge assembly 50 along the mandrel 40 and thus contracting the relative spacing of the head of mandrel 40 and the wedge assembly 50, the end portions 32 and 34 of the gripper 30 are caused to expand and engage the interior walls of the tube 12, the sharp teeth on the outer surfaces of the end portions 32 and 34 securely gripping the interior wall surfaces of the tube 12 at positions displaced form the defect in the tube 12, with the central portion 36 of the gripper 30 spanning the defect. As will be appreciated, the axial length of the gripper 30 may be selected as desired, so as to afford the necessary spanning distance. The sets of slots 38 and 39 are of sufficient axial length so as to permit the radial expansion of the end portions 32 and 34 without creating unacceptable stresses in, or permanent deformation of, any portion of the gripper 30 when the end portions 32 and 34 are so expanded.

The mandrel 40, shown in Figure 4, includes a head comprising a hemispherical end surface 41, an adjacent, generally cylindrical portion 42 and a tapered portion 43 having a male frustoconical surface mating that of the female, or interior frustoconical receiving surfaces 33 of the end portions 32 and 34 of gripper 30. The tapered portion 43 at its smallest diameter blends through a radius, a reduced diameter cylindrical portion, and a further radius to merge with a central, cylindrical section 44 which in turn blends through a radius to join a reduced diameter cylindrical portion 45 which in turn blends through a radius to join a threaded portion 46 of cylindrical cross-section, the latter in turn connecting integrally to end portion 47 having a hexagonal cross-section, or outer surface.

With reference to Figures 1A, 1B, 3 and 4, the tube protection device 10 is assembled by inserting the mandrel 40 within the gripper 30; a pair of diametrically opposed, radially oriented holes 48 located at an intermediate position of the cylindrical portion 44 of the mandrel 40 are aligned with the L-shaped slots 37 and a corresponding pair of pins 49 then are force fit into the holes 48 to maintain the gripper 30 and mandrel 40 together in limited rotational and axial sliding relationship, for purposes hereinafter described.

The wedge assembly 50, as seen in Figure 5, includes three elements, namely, a wedge 52, a wedge nut 54, and a collar 56. The collar 56 is formed in two semi-cylindrical parts 56a and 56b, which are assembled onto wedge 52 with the respective, inward radial lips thereof (as shown at 57b for part 56b) received in the annual recess 53 in wedge 52. The parts 56a and 56b then are welded together along their respective, common longitudinal edges, as shown by weld bead 58, and are welded at their respective lower peripheral edges to the wedge nut 54, as shown by weld bead 59. Collar 56 and wedge nut 54 thus are made integral, and are locked together with, but are free to rotate relatively to, wedge 52. Wedge 52 is tapered at its outer end to define a male frustroconical surface corresponding to the female, or interior, frustroconical surfaces 33 of the end portions 32 and 34 of the gripper 30. Wedge nut 54 is interiorly threaded so as to be received in threaded engagement on the threaded portion 46 of the mandrel 40. The exterior surface of wedge nut 54 is formed to have a hexagonal outer surface by which it may be driven in rotation, thereby to axially advance along the threaded portion 46 of mandrel 40. Thus, when the mandrel 40 and gripper 30 are assembled as in Figure 1A, rotation of the wedge nut 54 will cause the respective male frustroconical surfaces of tapered portion 43 of mandrel 40 and of wedge 52 to move, simultaneously, axially inwardly, imposing a radially outward force against the mating female frustroconical surfaces 33 of gripper end portions 32 and 34 and causing the latter to expand radially outwardly and move from the relaxed condition illustrated in Figure 1A to the clamped condition illustrated in Figure 1B. The toothed outer surfaces of end portions 32 and 34 thus are caused to be driven toward and securely engage the interior side walls of the tube 12.

The installation tool 20 may comprise a commercially available power drive device 22, such as a Stanley crowfoot nut setter, with which a specially configured adaptor 60 is employed; adaptor 60 is shown in more detail in the plan view of Figure 6A and the cross-sectional elevational view of Figure 6B. The power drive device 22 and adaptor 60 function in cooperation with an end piece 70 and an end extension 75, and through the link mechanism 24, to operate the device 10 between its relaxed and clamped conditions. The adaptor 60 includes a cylindrical bore 62 extending therethrough approximately one-fourth of the thickness dimension thereof and an elongated slot 64 which extends as an aperture through the remainder of that same thickness dimension along the common axis of bore 62. Suitable screw holes are provided through the adaptor 60 for screw-mounting same to the power drive device 22, as best seen in Figure 2A. The end extension 75 is of generally cylindrical configuration and has a hexagonal, or hex-nut outer surface (i.e., a hexagonal cross-section) throughout its length such that diametrically opposite, planar flats of the hexagonal outer surface are engaged by the parallel flat surfaces of the slot 64 to prevent rotation of the end extension 75 when inserted therein. End extension 75 includes an axial bore throughout the length thereof for receiving a stabilizing wire 78 and a radial bore in the side wall for receiving a set screw 77; as will be described, the stabilizing wire 78 is inserted through a central, or axial bore which extends throughout all of the elements of link mechanism 24 for interconnecting the drive socket 26 with the end extension 75, the set screw 77 clamping the wire 78 within the end extension 75. As will be further explained, in the case of the removal socket 28, a corresponding wire 79 similarly interconnects the removal socket 28 with the end extension 75.

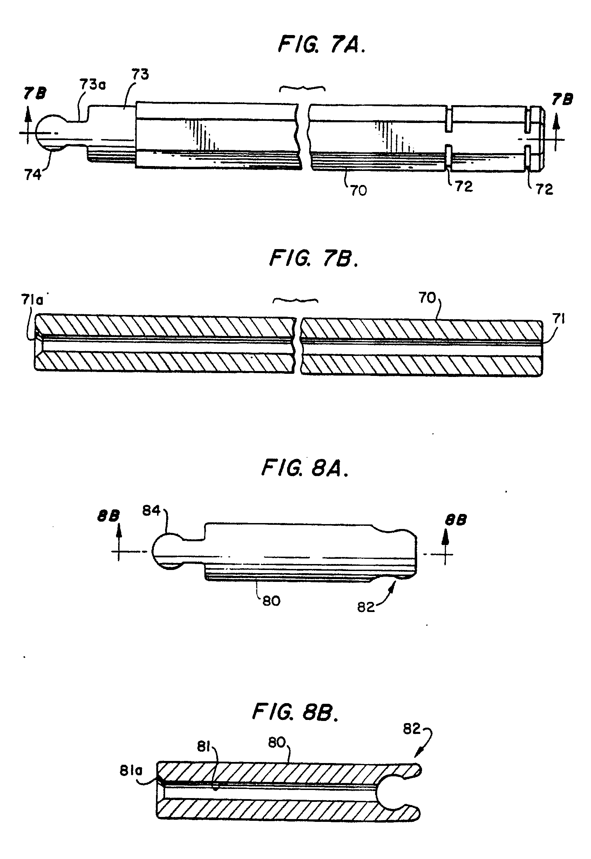

End piece 70 is shown in more detail in the plan view of Figure 7A and in the cross-sectional view of Figure 7B, the latter taken along line 7B-7B in Figure 7A. Axial bore 71 seen in Figure 7B is provided for receiving the wire 78 or 79, above referenced. The majority of the axial length of end piece 70 has a hex-nut surface, (i.e., hexagonal cross-section), a pair of spaced, retaining ring slots 72 being provided adjacent the free end thereof. The end piece 70 further includes an end portion 73 having a cylindrical cross-section, preferably of the same diameter as the spacing between the flats of the hexagonal cross-section portion, a neck portion 73a and an integral, male cylindrical joint element 74; the axis of the cylindrical joint element 74 extends transversely of the axis of the end piece 70, as will be appreciated from a comparison of the views of Figures 7A and 7B. The axial bore 71 is counter-bored to afford a flared opening 71a in the male cylindrical joint element 74, for a reason to be explained.

With reference to Figure 2A, the end piece 70 is received at the free end of its hexagonal-surface portion through a suitable drive-engaging fixture in the power drive element 22 and held in position against axial displacement therefrom by retaining rings 23 received in the slots 72, the free end thereof extending into the cylindrical bore 62 of the adaptor 60 for free rotation therein.

A plurality of links 80 interconnect the end piece 70 with, selectively, the drive socket 26 or the removal socket 28, shown in Figures 2A and 2B, respectively, a single one of which links 80 is shown in plan and cross-sectional views in Figures 8A and 8B, respectively. Link 80 is of generally cylindrical cross-section and includes a female cylindrical socket element 82 at one end thereof and a male cylindrical joint element 84 at the opposite end thereof. Link 80 furthermore includes a central, axial bore 81 having a flared opening 81a at the end thereof defined by the male cylindrical joint element 84.

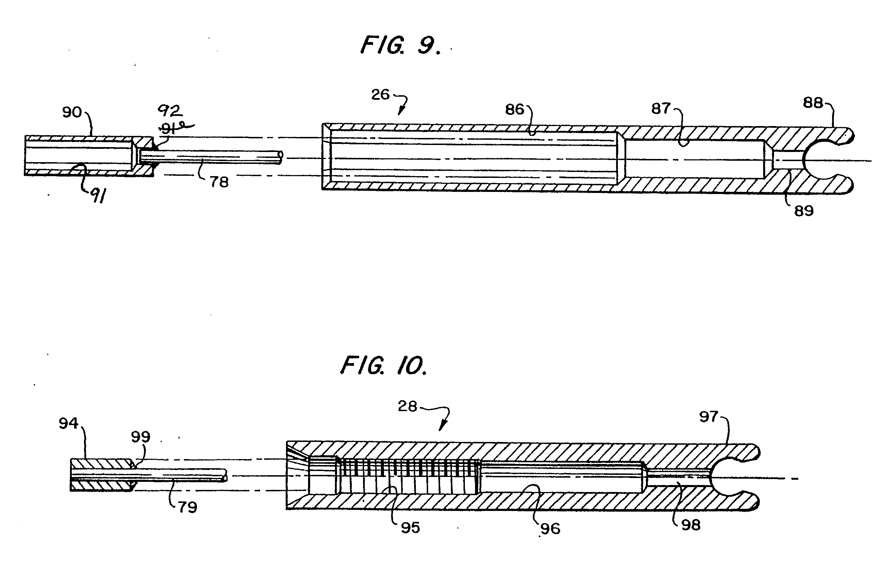

The drive socket 26 of Figure 2A, shown in more detail in the exploded, partially cross-sectional view of Figure 9, comprises a female hexagonal drive socket 86, an inner, female holding socket 87, and a female cylindrical socket element 88, the latter receiving, in a slide-fit connection, the male cylindrical joint element 84 of a next adjacent first link 80 of the link mechanism 24. The axial and diametric dimensions of the inner, female holding socket 87 are proportioned to receive therein an inner holding element 90, for relatively free rotation therewithin. The inner holding element 90 furthermore includes a reduced diameter central bore 91 for receiving a terminal end of a stabilizing wire 78, which is secured thereto such as by weld bead 92. The drive socket 86 is suitably dimensioned to be received over the hexagonal surface of wedge nut 54, shown in Figure 5.

When the drive socket 26 is assembled, as illustrated in Figure 2A, the holding element 90 is received within the inner, female holding socket 87, the wire 78 extending through the central bore 89 therein and emerging through the female cylindrical socket element 88 and thereafter extending into the cylindrical male joint element 84 of the adjacent link 80, and through the corresponding bores 81 in each successive link element 80, central bore 71 of the end portion 70 and the central bore (not shown) of the end extension 75 wherein it is secured by set screw 77. The successive links 80 are assembled in succession and the wire 78 fed therethrough, to achieve the required length of link mechanism 24. It thus will be seen that the power drive device 22 can drive the end piece 70 in rotation while the end extension 75, secured against rotation by adaptor 60, holds the wire 78 securely therein by the set screw 77 and prevents any significant rotational movement of the wire 78 throughout its length. Thus, inner holding element 90 is restrained against rotation by wire 78 and holds mandrel 40 relatively non-rotational while link mechanism 24, driven by power drive device 22, rotates the drive socket 26. The outer drive socket 86, engaged over wedge nut 54, thereby rotates same, advancing wedge nut 54 along and relatively to the mandrel 40; this causes the head of the mandrel 40 and wedge nut 54 to move axially toward each other, relative to the end portions 32 and 34 of the gripper 30, and causes the latter to move from the relaxed condition thereof shown in Figure 1A to the clamped condition thereof shown in Figure 1B. The device 22, as is conventional, applies a limited, maximum torque, selected by pre-calibration for the material and thickness of any given tube 12, so as not to alter the outer surface of tube 10 in the clamped condition of gripper 30. It will be appreciated that the cylindrical joints permit pivotal movement of adjacent links 80 about an axis transverse to the central axis of each link 80, the flared ends 71a and 81a affording clearance for the wire 78. Moreover, since the male element 84 is offset by 90 degrees from the female element 82 in each link 80, each grouping of four (4) links 80 affords 360 degrees of limited pivotal freedom in 90 degree increments; if desired, smaller angular offsets of the male and female elements 84 and 82 in each link 80 may be employed, in conjunction with shorter axial lengths of individual links 80, to achieve an even greater number of incremental degrees of freedom in a given length of the link mechanism 24.

As before noted, the installation tool 20 may also be employed to release a tube protection device 10 from the clamped condition of Figure 1B to the relaxed condition of Figure 1A, by opposite rotation of the drive socket 26, whereby the wedge assembly 50 is released from the mandrel 40 and removed from the tube 12. The end portions 32 and 34 of the gripper 30 thus contract radially inwardly, disengaging their toothed surfaces from the inner wall surfaces of tube 12 and releasing the device 10 for movement relative to the tube 12. Thereafter, the device 10 may be removed, employing the removal socket 28 on the link mechanism 24.

The removal socket 28 of Figure 2B is shown in more detail in the cross-sectional view of Figure 10. With concurrent reference to Figures 2B and 10, the removal socket 28 includes a female threaded socket 95, a reduced diameter holding socket 96, and a female cylindrical socket element 97, an axial bore 98 extending through the latter. Stabilizing wire 79 is received through the axial bore 98 and is secured at its free end to a cylindrical stop piece 94. Wire 79 is received in an axial bore in stop piece 94 and secured thereto, such as by a weld bead 99. In use, the wire 79 is inserted through the sockets 95 and 96 and the bore 98 in the removal socket 28, to seat the stop piece 94 in the female cylindrical holding socket 96; the wire 79 thereafter extends through the axial bores of successive links 80, end piece 70 and end extension 75 and is secured in the latter by the set screw 77. In the removal operation, the removal socket 28 is inserted through the tube 12, utilizing the necessary number of links 80 to position the removal socket 28 over the wedge nut 54. By clockwise rotation of the power drive device 22 operating through end piece 70 and link mechanism 24, the removal socket 28 is threaded onto the threaded portion 46 of mandrel 40, to a secure position. The link mechanism 24 is then inserted further into tube 12, to advance the mandrel 40 axially relatively to gripper 30. If required, link mechanism 24 may be hit at its free end (e.g., on end extension 75), to "free" tapered portion 43 of the mandrel head from the surface 33 of the end portion 32 of gripper 30 (in the event it remains frictionally engaged therewith). With reference to Figures 1A and 1B, pin 49 moves axially to the left, along and relatively to the longitudinal leg of slot 37. Thereafter, mandrel 40 is rotated in a clockwise direction through link mechanism 24, causing pin 49 to be received in a locked position in the transverse leg of slot 37. The link mechanism 24 then may be used to pull the device 10 from the tube 12, pin 49 assuring that the gripper 30 is not inadvertently engaged and expanded by the mandrel 40 and instead remains free to slide through the tube 12.

The link mechanism 24 and removal socket 28 thus permit convenient removal of the device 10 from a remote position within tube 12. It will be appreciated that if tube 12 is removed from the steam generator and cut into a segment affording an open end adjacent the wedge assembly 50, that the wedge nut 52 is then directly accessible, whereby the foregoing operations for releasing and removing the device 10 can be performed without use of the link mechanism 24.

**Claims**

1. Apparatus (10, 20) for protecting a region of a tube (12) from deformation in a tube-type steam generator during withdrawal of the tube (12) through an aperture in a support structure (14) which frictionally engages the exterior walls of said tube (12), said apparatus (10, 20) comprising:

    a tube protection device (10) of predetermined axial length sufficient to span the region of the tube (12) to be protected from deformation, said device (10) including gripper means (30) disposed at opposite ends (32, 34) of said device (10) which are expansible from a first relaxed state displaced from the interior wall surfaces of said tube (12) to a clamped second state in which said gripper means (30) releasably and frictionally engage the respective, contiguous interior wall surfaces of said tube (12);

    actuator means (40) operable through rotation in a first sense for actuating said opposite ends (32, 34) of said gripper means (30) to expand from said relaxed state to said clamped state and operable through rotation in an opposite sense to permit said gripper means (30) to contract from said clamped state to said relaxed state, wherein said gripper means (30) includes a generally cylindrical metal sleeve (30) configured at its opposite ends (32, 34) to permit elastic expansion and contraction thereof between said relaxed and clamped conditions, and wherein

said actuator means (40) includes a mandrel (40) received within said sleeve (30) having a first end (43) mating with the interior of a corresponding end (33) of said gripper means (30) and a second end (46, 47) extending longitudinally from the corresponding second end (34) of said gripper means (30), said second end (46, 47) of said mandrel (40) comprising a drive engaging portion (47) and an externally threaded portion (46) extending from said drive engaging portion (47) toward said corresponding second end (34) of said gripper means (30); and wedge means (50) having a surface at a first end thereof disposed toward said gripper means (30) for engaging the interior of said corresponding second end (34) thereof and a drive engaging means (26) being received for threaded rotation on said externally threaded portion (46) of said second end (46, 47) of said mandrel (40) for selective axial displacement along said mandrel (40) in first and second opposite directions in accordance with selective rotation thereof, relative to said mandrel (40), in corresponding first and second opposite senses, characterized by:

selectively connectable means (24) including means (20) for selectively engaging said drive engaging means (26) of said wedge means (50) for selectively rotating said wedge means (50) in said first and second senses, said selectively connectable means (24) further including:

holding means (90), disposed coaxially within said drive engaging means (26) thereof and rotatable relatively thereto, for engaging said drive engaging portion (47) of said mandrel (40);

means (78) for restraining said holding means (90) against rotation; and

a link mechanism (24) of adjustable length receivable through a tube (12) from an open end thereof for connecting said drive engaging portion (47) thereof with said drive engaging means (26) of said wedge means (50), and said holding means (90) thereof with said engaging portion (47) of said mandrel (40), wherein said means (78) for restraining rotation of said holding means (90) comprises a wire (78) extending coaxially through axial bores (81) provided therefor in said link mechanism (24) to an accessible position at the exterior of the open end of said tube (12).

## Revendications

1. Appareil (10, 20) pour protéger une région d'un tube (12) de la déformation dans un générateur de vapeur du type à tubes pendant le retrait du tube (12) à travers une ouverture d'une structure (14) de support qui porte de façon frottante contre les parois externes dudit tube (12), ledit appareil (10, 20) comprenant:

un dispositif (10) de protection de tube de longueur axiale prédéterminée suffisante pour couvrir la région du tube (12) à protéger de la déformation, ledit dispositif (10) comprenant des moyens (30) de saisie disposés aux extrémités opposées (32, 34) dudit dispositif (10), qui sont aptes à se dilater depuis un premier état de relâchement dans lequel ils sont écartés des surfaces des parois internes dudit tube (12) jusqu'à un second état de blocage dans lequel lesdits moyens de saisie (30) portent de façon libérable et frottante contre les surfaces des parois internes contiguës respectives dudit tube (12);

des moyens (40) d'actionnement aptes, par rotation dans un premier sens, à actionner lesdites extrémités opposées (32, 34) desdits moyens (30) de saisie pour qu'ils se dilatent depuis ledit état de relâchement jusqu'au dit état de blocage et aptes, par rotation dans le sens opposé, à permettre auxdits moyens (30) de saisie de se contracter depuis ledit état de blocage jusqu'au dit état de relâchement,

lesdits moyens (30) de saisie comportant un manchon (30) métallique généralement cylindrique présentant à ses extrémités opposées (32,34) une configuration apte à permettre sa dilatation et sa contraction élastiques entre lesdits états de relâchement et de blocage, et

lesdits moyens (40) d'actionnement comportant un mandrin (40) reçu à l'intérieur dudit manchon (30) et comportant une première extrémité (43) s'accouplant avec l'intérieur d'une extrémité (33) correspondante desdits moyens de saisie (30) et une seconde extrémité (46, 47) s'étendant longitudinalement à partir de la seconde extrémité (34) correspondante desdits moyens de saisie (30), ladite seconde extrémité (46, 47) dudit mandrin (40) comprenant une partie (47) d'entraînement par engagement et une partie (46) filetée extérieurement s'étendant depuis ladite partie (47) d'entraînement par engagement vers ladite seconde extrémité (34) correspondante desdits moyens de saisie (30); et des moyens (50) de calage comportant à une première de leurs extrémités une surface disposée en direction desdits moyens de saisie (30) et destinée à venir en contact avec l'intérieur de ladite seconde extrémité (34) correspondante de ceux-ci et des moyens (26) d'entraînement par engagement reçus, en vue d'un vissage, sur ladite partie (45) filetée extérieurement de ladite seconde extrémité (46, 47) dudit mandrin (40) en vue d'un déplacement axial sélectif le long dudit mandrin (40) dans des première et seconde directions opposées conformément à la rotation sélective de ceux-ci, par rapport audit mandrin (40), dans des premier et second sens opposés correspondants, caractérisé par:

des moyens (24) à connexion sélective comprenant des moyens (20) pour venir en prise sélectivement avec lesdits moyens (26) d'entraînement par engagement que comportent lesdits moyens (50) de calage en vue de faire tourner de façon sélective lesdits moyens (50) de calage dans lesdits premier et second sens, lesdits moyens (24) à connexion sélective comprenant en outre:

des moyens (90) de retenue, disposés coaxialement à l'intérieur de leurs moyens (26) d'entraînement par engagement, aptes à tourner par rapport à ceux-ci et destinés à s'engager avec ladite partie (47) d'entraînement par engagement, que comporte ledit mandrin (40);

des moyens (78) pour empêcher lesdits moyens (90) de retenue de tourner; et

un mécanisme (24) de liaison de longueur réglable apte à être reçu à l'intérieur d'un tube (12) depuis une extrémité ouverte de celui-ci en vue de relier ladite partie (47) d'entraînement par engagement de ce mécanisme auxdits moyens (26) d'entraînement par engagement desdits moyens (50) de calage, et lesdits moyens (90) de retenue de celui-ci à ladite partie (47) d'entraînement par engagement dudit mandrin (40),

lesdits moyens (78) pour empêcher la rotation desdits moyens (90) de retenue comprenant un fil (78) s'étendant coaxialement à travers des alésages axiaux (81) prévus à cet effet dans ledit mécanisme (24) de liaison jusqu'à une position située à l'extérieur de ladite extrémité ouverte dudit tube (12).

## Ansprüche

1. Vorrichtung (10, 20) zum Schutz gegen Verformung eines Bereiches eines Rohres (12) in einem Röhren-Dampfgenerator, wenn das Rohr (12) durch eine Öffnung in einem Traggestell (14) herausgezogen wird, in der die Außenwände des Rohres (12) reibend berührt werden, wobei die Vorrichtung (10, 20) gekennzeichnet ist durch

eine Schutzeinrichtung (10) für das Rohr, die eine vorbestimmte axiale Länge aufweist, die ausreicht, um den vor Verformung zu schützenden Bereich des Rohres (12) zu überspannen, die Schutzeinrichtung (10) an ihren gegenüberliegenden Enden (32, 34) mit Greifern (30) versehen ist, die aus einem ersten, von den Innenflächen des Rohres (12) abgesetzten, entspannten Zustand zu einem geklemmten zweiten Zustand dehnbar sind, in dem die Greifer (30) die entsprechenden anstoßenden Innenwandflächen des Rohres (12) lösbar und reibend berühren;

Betätigungsorgane (40), die durch Drehen in einer ersten Richtung die gegenüberliegenden Enden (32, 34) der Greifer (30) betätigen, um die Greifer aus dem entspannten in den geklemmten Zustand zu dehnen, und durch Drehen in eine entgegengesetzte Richtung die Greifer (30) aus dem geklemmten in den entspannten Zustand zu verkürzen, worin

die Greifer (30) aus einer im wesentlichen zylindrischen Metallhülse (30) bestehen, deren gegenüberliegende Enden (32, 34) so gestaltet sind, daß sie zwischen den entspannten und geklemmten Zuständen gedehnt und gekürzt werden können, und worin die Betätigungsorgane (40) einen in die Hülse (30) eingesetzten Dorn (40) aufweisen, dessen erstes Ende (43) in das Innere eines entsprechenden Endes (33) des Greifers (30) paßt und dessen zweites Ende (46, 47) sich längs vom entsprechenden zweiten Ende (34) des Greifers (30) erstreckt, dieses zweite Ende (46, 47) des Dornes (40) einen, den Antrieb erfassenden Abschnitt (47) aufweist, an den sich ein Abschnitt (46) mit Außengewinde anschließt und gegen das entsprechende zweite Ende (34) des Greifers (30) gerichtet ist; und eine Keilanordnung (50) mit einer Fläche an einem ersten Ende vorgesehen ist, die gegen den Greifer (30) gerichtet ist, um das Innere des entsprechenden zweiten Endes (34) des Greifers zu berühren, und auf dem Außen gewinde des Abschnitts (46) des zweiten Endes (46, 47) des Dornes (40) eine den Antrieb erfassende Einrichtung (26) aufgeschraubt ist, um durch Drehen selektiv axial entlang des Dornes (40) in eine erste und eine zweite entgegengesetzte Richtung verschoben zu werden,

**dadurch gekennzeichnet**, daß

selektiv einschaltbare Einrichtungen (24) vorgesehen sind, die Mittel (20) zum selektiven Erfassen der Einrichtung (26) der Keilanordnung (50) aufweisen, um selektiv diese Keilanordnung (50) in einem ersten und einem zweiten Sinn zu drehen, wobei die selektiv einschaltbaren Einrichtungen (24) eine Haltevorrichtung (90) aufweisen, die koaxial innerhalb der den Antrieb erfassenden Einrichtung (26) angeordnet und in Bezug hierzu drehbar ist, um den den Antrieb erfassenden Abschnitt (47) des Dornes (40) zu berühren; Mittel (78) das Drehen der Haltevorrichtung (90) verhindern; und ein Gelenkmechanismus (24) verstellbarer Länge von einem offenen Ende aus durch das Rohr (12) gesteckt ist, um den den Antrieb erfassenden Abschnitt (47) mit der Einrichtung (26) der Keilanordnung (50) und die Haltevorrichtung (90) mit dem den Antrieb erfassenden Abschnitt (47) des Dornes (40) zu verbinden, worin die das Drehen der Haltevorrichtung (90) verhindernden Mittel (78) aus einem Draht (78) bestehen, der koaxial durch axiale Bohrungen (81) im Gelenkmechanismus (24) bis zu einer zugänglichen Stelle außerhalb des offenen Endes des Rohres (12) gesteckt ist.

FIG. 1A.

FIG. 1B.

11

FIG. 2A.

FIG. 2B.

EP 0 186 489 B1

FIG. 3.

FIG. 4.

FIG. 5.

FIG. 6A.

FIG. 6B.

EP 0 186 489 B1

## FIG. 7A.

## FIG. 7B.

## FIG. 8A.

## FIG. 8B.

FIG. 9.

FIG. 10.